Europäisches Patentamt

**European Patent Office**

Office européen des brevets

(19)

(11) Veröffentlichungsnummer : **0 082 261**
**B1**

(12) # EUROPÄISCHE PATENTSCHRIFT

(45) Veröffentlichungstag der Patentschrift :
18.09.85

(51) Int. Cl.⁴ : **C 08 F 8/40**

(21) Anmeldenummer : **82109450.5**

(22) Anmeldetag : **13.10.82**

(54) Verfahren zur Herstellung von Polyacrylnitrilpolyphosphonsäure und ihre Verwendung als Flammschutzmittel.

(30) Priorität : **14.12.81 DE 3149454**

(43) Veröffentlichungstag der Anmeldung :
**29.06.83 Patentblatt 83/26**

(45) Bekanntmachung des Hinweises auf die Patenterteilung : **18.09.85 Patentblatt 85/38**

(84) Benannte Vertragsstaaten :
**AT BE CH DE FR GB IT LI NL**

(56) Entgegenhaltungen :
**DE-A- 2 247 335**
**DE-A- 3 101 939**
**DE-B- 1 105 175**

(73) Patentinhaber : **CHEMISCHE WERKE HÜLS AG**
**- RSP Patente / PB 15 - Postfach 13 20**
**D-4370 Marl 1 (DE)**

(72) Erfinder : **Grundmann, Raban, Dr.**
**Ludwigshafener Strasse 6**
**D-4370 Marl 1 (DE)**

Jouve, 18, rue St-Denis, 75001 Paris, France

**Beschreibung**

Gegenstand der Erfindung ist ein Verfahren zur Herstellung neuer polymerer Phosphonsäuren auf der Basis von Acrylnitrilpolymeren und ihre Verwendung als Flammschutzmittel in Kunststoffen und intumescierenden Anstrichen.

Der Anmelder hat sich unter Bezugnahme auf die ältere DE-A1-31 01 939 freiwillig eingeschränkt und für den Vertragsstaat Bundesrepublik Deutschland gesonderte Patentansprüche vorgelegt.

Die Herstellung von halogenfreien Flammschutzkombinationen unter Verwendung von Phosphaten und Polyphosphaten (US-PS 3 936 416, DE-OS 28 39 710 = GB-PS 2 006 223 = US-PS 4 198 493) oder Phosphonsäuren (DE-OS 28 27 867 = EP-PS 6 568) — gegebenenfalls in Abmischungen mit Stickstoffverbindungen und Hydroxylverbindungen — ist bekannt. Diese intumescierenden Flammschutzmittel bilden beim Brand auf dem Polymeren einen schwerbrennbaren Koksschaum, der das restliche Material vor der weiteren Flamm- und Hitzeeinwirkung abschirmt und zum Verlöschen des Polymeren beiträgt. Viele flammhemmende Anstriche beruhen auf dem gleichen Flammschutzprinzip (DE-OS 17 94 343 = CA-PS 822 594 = GB-PS 1 074 243, DE-OS 23 15 416 = US-PS 4 013 599).

Alle diese Zusammensetzungen haben den Nachteil, daß sie gegenüber Wassereinwirkung unbeständig sind und von Wasser extrahiert werden (J. Fire Retard. Chem. 4 (1977), Nr. 3, S. 154).

Aufgabe der Erfindung ist die Schaffung halogenfreier, wasserbeständiger Flammschutzmittel.

Diese Aufgabe wird erfindungsgemäß entsprechend den Angaben der Patentansprüche gelöst.

Aus DE-OS 26 26 767 = GB-PS 1 530 856 = CA-PS 1 077 518 ist eine Methode zur Addition von phosphoriger Säure an Carbonsäurenitrilen mit 1 bis 12 Kohlenstoffatomen unter Bildung von Aminoalkyl-diphosphonsäuren bekannt. In den Beispielen werden bevorzugt Umsetzungen von Nitrilen mit niedrigem Alkylrest (Acetonitril, Propionitril) durchgeführt.

Überraschenderweise wurde gefunden, daß die Umsetzung von Polyacrylnitril mit der Schmelze von phosphoriger Säure möglich ist und sogar mit stark exothermer Reaktion erfolgt. Werden größere Mengen an Polyacrylnitril und phosphoriger Säure auf 160 bis 180 °C erhitzt, tritt ein Temperaturanstieg auf über 300 °C, verbunden mit einer Selbstentzündung, auf. Bei angemessener Dosierung der Reaktionspartner ist die Umsetzung jedoch gut beherrschbar. Das Reaktionsprodukt ist in Wasser kaum löslich und weist nach dem gründlichen Auswaschen überschüssiger phosphoriger Säure einen Gehalt von bis zu 17 % chemisch gebundenem Phosphor auf.

Als Acrylnitrilpolymerisate sind sowohl die Homo- als auch die Copolymerisate des Acrylnitrils geeignet. Die Comonomeren können Acrylsäure, Acrylsäureester, Acrylamid, Vinylacetat, Vinylether, Styrol, Butadien, Buten, Vinylchlorid oder Vinylidenchlorid sein. Die Polymerisate enthalten im allgemeinen mindestens 20 Mol.-% Acrylnitril. Sie können nach bekannten Verfahren — bevorzugt durch radikalische oder anionische Polymerisation — hergestellt werden und weisen Molekulargewichte von 1 000 bis 200 000, bevorzugt von 10 000 bis 100 000, auf.

Pro Mol der Nitrilgruppen im Polymeren werden 0,2 bis 8 Mol $H_3PO_3$, vorzugsweise 2 bis 4 Mol $H_3PO_3$, eingesetzt. Als $H_3PO_3$ verwendet man möglichst ein wasserfreies Produkt vom Schmelzpunkt 65 bis 70 °C, jedoch sind auch technische Produkte von geringer Reinheit einsetzbar.

Ebenso läßt sich überschüssige $H_3PO_3$, die nach der Umsetzung zur Polyacrylnitril-poly-phosphonsäure bei der Aufarbeitung als wäßrige Lösung anfällt, nach dem Abtrennen des Wassers in die Reaktion zurückführen und für weitere Ansätze verwenden.

Die Reaktion läßt sich durch Katalysatoren beschleunigen. Beispiele für Katalysatoren sind: $AlCl_3$, $ZnCl_2$, LiBr, $H_3PO_4$. Die Katalysatoren setzt man im allgemeinen in Mengen von 0,05 bis 5 Gewichtsprozent, bezogen auf Polyacrylnitril, ein.

Die Additionsprodukte aus Polyacrylnitril und phosphoriger Säure lassen sich besonders vorteilhaft herstellen, indem man zu der Schmelze von wasserfreier $H_3PO_3$ bei Temperaturen von 120 bis 220 °C, insbesondere 160 bis 190 °C, das Acrylnitrilpolymere eindosiert, wobei darauf zu achten ist, daß die zudosierte Verbindung rasch abreagiert, bevor man eine weitere Menge des Acrylnitrilpolymeren zusetzt. Die Verwendung von Lösungsmitteln, wie etwa Dimethylformamid, $\gamma$-Butyrolacton, $\epsilon$-Caprolactam, Ethylencarbonat oder Sulfolan, ermöglicht eine günstige Reaktionsführung. Ebenso ist es möglich, zur erhitzten Lösung von Polyacrylnitril (PAN) die $H_3PO_3$ zu dosieren oder kontinuierlich Produktströme von PAN und $H_3PO_3$ nach dem Vermischen in einer heißen Reaktionszone umzusetzen.

Zur Aufarbeitung des Reaktionsproduktes wird die erstarrte Schmelze zerkleinert und mehrmals mit Wasser die phosphorige Säure ausgewaschen. Überraschenderweise ist es auch möglich, das Reaktionsgemisch, bestehend aus PAN-Polyphosphonsäure und überschüssiger phosphoriger Säure, mit sehr wenig Wasser zu lösen. Dabei setzt man 10 bis 50 ml Wasser pro Mol phosphoriger Säure zu. Anschließend fällt man das Produkt durch Verdünnen mit einem Überschuß Wasser aus, wobei die phosphorige Säure zum größten Teil in Lösung bleibt und abgetrennt werden kann.

Die Polyacrylnitrilpolyphosphonsäure liegt nach dem Trocknen als gelblicher Feststoff vor. Sie hat einen Phosphorgehalt von 1 bis 17 %, vorzugsweise von 5 bis 17 %. Besonders bevorzugt sind Polyphosphorsäuren des Polyacrylnitrils, die 15 bis 16,5 % Phosphorgehalt aufweisen. Der Stickstoffgehalt der Produkte liegt im allgemeinen bei 4 bis 16 Gewichtsprozent, vorzugsweise bei 6,5 bis 7,5 Gewichtsprozent.

Die Polyacrylnitrilpolyphosphonsäuren sind im Wasser kaum, in Laugen jedoch gut löslich. Durch

2

Umsetzung in Wasser mit Laugen oder Metalloxiden erhält man die Salze der Polyphosphonsäuren, gleichzeitig kann ein Teil der Nitrilgruppen zu Amid- oder Carboxylgruppen verseift werden. Die Natrium-, Kalium- und Ammoniumsalze der Polyacrylnitrilpolyphosphonsäure sind in Wasser löslich.

Die erfindungsgemäßen Additionsprodukte von phosphoriger Säure an Polyacrylnitril wirken aufgrund ihres Phosphor- und Stickstoffgehaltes ohne weitere Zusätze als Flammschutzmittel in Kunststoffen. Man setzt die Polyacrylnitrilpolyphosphonsäure in Mengen von 3 bis 30 Gewichtsprozent, bezogen auf die Kunststoffabmischung, ein. Ein besonderer Vorteil liegt zudem in der Verminderung der Abtropfneigung von brennenden Polymeren, die die erfindungsgemäßen Phosphonsäuren enthalten.

Bevorzugte Kunststoffe für die Ausrüstung mit Polyacrylnitrilpolyphosphonsäure sind : Polyolefine, speziell Polypropylen, Polyester, insbesondere Polybutylenterephthalat und Polyethylenterephthalat, Polyamide, Polystyrol, Polyurethane, Polyepoxidharze, Cellulosepolymere und Acrylnitrilpolymere.

Eine besonders gute Flammschutzwirkung wird erzielt, wenn man das PAN-$H_3PO_3$-Additionsprodukt mit Melamin oder stickstoffreichen Verbindungen, wie z. B. Harnstoff, Dicyandiamid, Guanylharnstoff oder mit stickstoffhaltigen Polymeren, wie Melaminformaldehydharz, Polyurethan, Polyamid, kombiniert. Auch die Salze von Melamin, wie z. B. Melamincyanurat, Melaminoxalat, Melaminphosphat, sind für die Abmischungen geeignet. Bevorzugt ist die Kombination mit Melamin, Melaminformaldehydharz oder Melamincyanurat, wobei man ein Gewichtsverhältnis von Polyphosphonsäure zu Stickstoffverbindung von vorzugsweise 1 : 0,2 bis 1 : 5, insbesondere von 1 : 0,5 bis 1 : 2 einsetzt.

Solche Mischungen aus PAN-Polyphosphonsäure und Melaminderivaten sind als intumescierende Flammschutzmittel in Kunststoffen, vorzugsweise in Polyolefinen, insbesondere in Polypropylen, von großer Wirksamkeit und werden durch Wasser kaum extrahiert.

Der Zusatz von hydroxylgruppenreichen Verbindungen, wie z. B. Stärke, Pentaerythrit, Cellulose oder Zuckern, kann zur Förderung der Koksschicht beim Brand beitragen und die Flammhemmung verbessern.

Die Konzentration an PAN-Polyphosphonsäure in Polypropylen-Mischungen beträgt 3 bis 30 Gewichtsprozent, vorzugsweise 15 bis 25 Gewichtsprozent. Die Gesamtkonzentration der Flammschutzzusätze im Polypropylen liegt je nach Grad der gewünschten Flammfestigkeit bei 5 bis 60 Gewichtsprozent, bevorzugt bei 20 bis 40 Gewichtsprozent. Besonders bevorzugt ist ein Polypropylencompound, das 30 bis 37 Gewichtsprozent einer Mischung von PAN-Polyphosphonsäure/Melamin/Pentaerythrit im Gewichtsverhältnis 1/0,4/0,2 bis 1/0,8/0,4 enthält und einen LOI von 29 bis 30 aufweist.

Ein weiteres bevorzugtes Anwendungsgebiet ist der Flammschutz von linearen Polyestern, wie Polyethylenterephthalat und Polybutylenterephthalat, und von Polyamiden, wie Polyamid 6.6, Polyamid 11 oder Polylaurinlactam (Polyamid 12). Die Konzentration der PAN-Polyphosphonsäure in diesen Polykondensaten liegt im Bereich 3 bis 30 Gewichtsprozent, vorzugsweise 5 bis 15 Gewichtsprozent. Durch Zusatz von Melamin, Melamincyanurat, Melaminoxalat oder anderen stickstoffreichen Verbindungen wird die Flammhemmung verbessert.

Das Gewichtsverhältnis von PAN-Polyphosphonsäure/Stickstoffverbindung liegt bevorzugt bei 1 : 2 bis 1 : 4.

Die Herstellung der flammgeschützten Thermoplaste gelingt nach bekannten Verfahren durch Mischen und Formen in Extrudern, Knetern, Walzen und Pressen oberhalb der Erweichungstemperatur der Polymeren. Die Verwendung der üblichen Kunststoffhilfsstoffe oder Füllstoffe, wie z. B. Stabilisatoren, Gleitmittel, Farbstoffe, Pigmente, Weichmacher, Glasfasern, Kreide, Talkum, ist neben dem beanspruchten Flammschutzmittel möglich.

Ein anderes Anwendungsgebiet liegt im Bereich der intumescierenden Anstriche. Die z. B. bekannten Systeme sind wegen mangelnder Beständigkeit gegenüber Wasser für den Außeneinsatz nicht geeignet. Durch Verwendung der PAN-Polyphosphonsäure werden intumescierende Flammschutzsysteme mit guter Witterungsbeständigkeit zugänglich.

Die Zusammensetzung solcher flammabweisenden Anstriche ist den erfindungsgemäßen Flammschutzkompositionen für Kunststoffe analog. Sie enthalten jedoch neben der Phosphor-, und gegebenenfalls Stickstoff- und Hydroxyl-Komponente in bekannter Weise ein filmbildendes Polymerisat, das in organischen Lösemitteln gelöst oder in Wasser dispergiert ist und als Bindemittel dient. Biespiele für solche Lackharze sind Homo- oder Copolymerisate von Vinylacetat, Acrylat, Acrylnitril, Styrol, Butadien, Vinylchlorid, Vinylidenchlorid, Chloropren oder Harze auf der Basis von Phenol, Harnstoff, Melamin, Epoxiden oder Kondensate, wie Polyester und Polyurethane. Weitere bekannte Bestandteile von intumescierenden Anstrichen sind Farbstoffe, Pigmente, Füllstoffe, Fasern, Eindickhilfsstoffe, Dispergiermittel, Netzmittel, Chlorverbindungen und Antistatika.

Zur Prüfung der flammhemmenden Eigenschaften der erfindungsgemäßen Kunststoffmischungen wurde der Sauerstoffindex (LOI) gemäß « ASTM D-2863 » herangezogen. Es werden Stäbchen der Abmessungen $150 \times 6 \times 3$ mm senkrecht in einem Glaszylinder bei unterschiedlichen $N_2/O_2$-Gemischen am oberen Ende entzündet. Man ermittelt die $O_2$-Konzentration, bei der die Probe länger als 3 Minuten brennt. Ein LOI gleich 20,9 bedeutet, daß die Probe bei Normalatmosphäre gerade noch brennt, bei niedrigerem $O_2$-Gehalt, z. B. 20,5 % $O_2$, jedoch verlischt.

Die Wasserbeständigkeit der flammgeschützten Mischungen wurde getestet, indem die Stäbchen für den Brandtest während 10 Tagen (pro Tag 8 Stunden) in heißem Wasser (90 °C) gerührt und anschließend erneut dem LOI-Test zugeführt wurden.

Beim UL 94-Test werden Stäbchen (125 × 12,7 × 3 mm) am unteren Ende 10 s mit einer 2 cm-Flamme entzündet. Die Zeit bis zum Verlöschen der Probe wird gestoppt. Direkt nach dem Verlöschen erfolgt eine zweite Zündung.

Beurteilung :

NB : Die Proben brennen im Mittel länger als 25 s.
V 2 : Die Proben verlöschen innerhalb von 25 s, brennende Tropfen entzünden jedoch einen 30,5 cm unter der Probe liegenden Wattebausch.
V 1 : Die Proben verlöschen innerhalb von 25 s, die Watte wird nicht entzündet.
V 0 : Die Proben verlöschen im Mittel innerhalb 5 s (max. 10 s), die Watte wird nicht entzündet.
Die Prüfung der intumescierenden Anstriche erfolgte an 1,5 mm starken Holzplatten (100 × 100 mm), die waagerecht über einer 3 cm langen Gasflamme befestigt wurden, so daß die Flammspitze die Mitte der Beschichtung gerade erreichte. Gemessen wurde die Zeit bis zum Durchschlagen der Flamme durch die Plattenoberfläche.
Die folgenden Beispiele erläutern die Erfindung :

I. Herstellung der Polyacrylnitril-poly-phosphonsäure

Beispiel 1

164 g phosphorige Säure (2 Mol) werden in einem Rührgefäß unter $N_2$ aufgeschmolzen. Bei 180 bis 190 °C setzt man innerhalb von 4 Stunden in kleinen Portionen von ca. 2 g 53 g Polyacrylnitril (MG ca. 50 000) zu und wartet nach jeder Zugabe die exotherme Reaktion ab. Die zähe Schmelze wird bei 190 bis 200 °C 2 Stunden nachgerührt. Beim Abkühlen erstarrt das Reaktionsgemisch zu einer harten, gelben Masse. Diese wird im Mörser zerkleinert und mit Wasser mehrfach ausgelaugt. Nach dem Trocknen erhält man 65,8 g eines hellgelben Feststoffes.
Analyse : 36,05 % C, 5,75 % H, 7,1 % N, 16,1 % P.

Beispiel 2

Entsprechend den Angaben des Beispiels 1 gibt man bei 190 °C zu 326 g phosphoriger Säure (4 Mol) und 1 g Aluminiumchlorid unter Stickstoff 90 g Polyacrylnitril (Copolymerisat mit 6 % Methylacrylat, MG 100 000).
Nach Beendigung der Reaktion verdünnt man das Reaktionsgemisch durch Eintropfen von 100 ml Wasser bei 160 bis 120 °C. Es entsteht eine nahezu klare Lösung, die in 3 l kaltem Wasser ausgefällt wird. Das Fällungsprodukt wird noch zweimal mit 1,5 ml Wasser aufgekocht, um es frei von phosphoriger Säure zu machen. Der Rückstand wird bei 120 °C im Vakuumschrank getrocknet.
Produktausbeute : 141 g     Phosphorgehalt : 16,4 %
                            Stickstoffgehalt :  6,9 %

Beispiel 3

In die Mischung von 98 g Phosphorsäure und 41 g phosphorige Säure gibt man bei 190 °C innerhalb 2 Stunden in kleinen Portionen von ca. 2 g 26,5 g Polyacrylnitril (MG 100 000). Nach Beendigung der exothermen Reaktion heizt man ca. 2 Stunden nach. Die Mischung wird bei 160 °C tropfenweise mit 25 ml Wasser versetzt und dann in 2 l kaltes Wasser eingerührt. Das ausgefallene Produkt wird abgetrennt, mehrmals mit Wasser gewaschen und bei 120 °C getrocknet.
Produktausbeute : 35 g     Phosphorgehalt : 9,4 %

Beispiel 4

41 g phosphorige Säure werden in 150 ml Sulfolan bei 190 °C unter $N_2$ vorgelegt und 13 g Polyacrylnitril (MG 100 000) in 150 ml Sulfolan innerhalb 4 Stunden werden zugetropft. Im Verlauf der Umsetzung fällt ein schmieriger Feststoff aus. Die Mischung wird 2 Stunden auf 190 °C gehalten, nach dem Abkühlen wird vom Feststoff vorsichtig abdekantiert und letzterer mehrfach mit Wasser aufgekocht, bis ein feinflockiges Material entsteht.
Produktausbeute : 8 g     Phosphorgehalt : 9,75 %
Aus dem Lösungsmittel läßt sich durch Eingießen in Wasser weiteres Produkt gewinnen.

II. Verwendung der Polyacrylnitrilpolyphosphonsäure als Flammschutzmittel

Beispiel 5

Die in der Tabelle angegebenen Bestandteile werden mit Polybutylenterephthalatpulver in einer Mühle gut vermischt und anschließend in einer beheizbaren Presse bei 230 bis 240 °C zu 3 mm Platten verpreßt. Die Bestimmung des LOI-Wertes erfolgt an Stäbchen (3 × 6 × 150 mm), für den UL 94-Test werden Stäbchen (3 × 12,7 × 125 mm) gesägt.

| Mischungen | Nr. 1 | 2 | 3 | 4 | 5 | 6 |
|---|---|---|---|---|---|---|
| Polybutylenterephthalat | 100 | 90 | 90 | 80 | 80 | 75 |
| PAN-Polyphosphonsäure (Beispiel 2) | – | 10 | 7 | – | 20 | 10 |
| Melamin | – | – | 3 | – | – | – |
| Melaminoxalat | – | – | – | 20 | – | 15 |
| Tests: LOI | 23,0 | 25,0 | 25,5 | 26,0 | 26,5 | 29,5 |
| UL 94 | NB | V 2 | V 2 | V 2 | V 2 | V O |

Beispiel 6

Analog zu Beispiel 5 werden Mischungen aus einem Polyamid-12-Pulver (Polylaurinlactam) mit den angegebenen Flammschutzzusätzen hergestellt und den o. g. Tests unterworfen.

| Mischungen | Nr. 1 | 2 | 3 | 4 | 5 | 6 | 7 | 8 |
|---|---|---|---|---|---|---|---|---|
| Polylaurinlactam | 100 | 85 | 85 | 85 | 85 | 80 | 70 | 70 |
| PAN-Polyphosphonsäure (Beispiel 2) | – | – | 15 | 10 | 10 | 20 | – | 10 |
| 1-Aminoethan-1.1-di-phosphonsäure | – | 10 | – | – | – | – | – | – |
| Melamin | – | 5 | – | 5 | – | – | – | – |
| Melamincyanurat | – | – | – | – | 5 | – | 30 | 20 |
| Tests: LOI | 22,5 | 23,0 | 25,0 | 25,5 | 26,0 | 26,0 | 27,5 | 27,5 |
| UL 94 | NB | NB | V 2 | V 2 | V 2 | V 2 | V 2 | V O |

Mischung Nr. 2 zeigt, daß eine niedermolekulare Phosphonsäure in Polyamid 12 keine ausreichende Flammschutzwirkung ergibt. Mischung Nr. 8 zeigt, daß mit der PAN-Polyphosphonsäure eine V 0-Buerteilung (d. h. selbstverlöschend, nicht brennend abtropfend) erreicht wird.

Beispiel 7

Die folgenden Mischungen wurden auf einer Laborwalze bei 160 bis 190 °C homogenisiert und dann zu 3 mm Platten gepreßt. Als Brandprüfung wurde der LOI-Test herangezogen. Nr. 1, 3 und 5 sind Vergleichsmessungen an den reinen Polymeren.

(Siehe Tabelle Seite 6 f.)

5

# 0 082 261

| Mischungen | Nr. 1 | 2 | 3 | 4 | 5 | 6 |
|---|---|---|---|---|---|---|
| Polystyrol | 100 | 60 | – | – | – | – |
| Polyethylen | – | – | 100 | 60 | – | – |
| Polypropylen | – | – | – | – | 100 | 60 |
| PAN-Polyphosphon-säure (Beispiel 1) | – | 27 | – | 27 | – | 27 |
| Melamin | – | 13 | – | 13 | – | 13 |
| LOI | 18,0 | 22,5 | 17,5 | 25,0 | 17,5 | 31,0 |

Beispiel 8

Auf einer Laborwalze wurden bei 190 °C die folgenden Polypropylenmischungen hergestellt und dem LOI-Test unterworfen (→ LOI I). Zur Prüfung der Wasserbeständigkeit wurden die Prüfstäbe während 10 Tagen (je 8 Stunden) in 90 °C heißem Wasser bewegt und anschließend erneut dem LOI-Test zugeführt (→ LOI II).

| Mischungen | Nr. 1 | 2 | 3 | 4 | 5 | 6 |
|---|---|---|---|---|---|---|
| Polypropylen | 80 | 70 | 70 | 70 | 65 | 60 |
| PAN-Polyphosphonsäure (Beispiel 1) | 13 | 20 | – | – | 20 | 25 |
| Hydroxymethanphosphon-säure | – | – | 20 | – | – | – |
| Ammoniumpolyphosphat | – | – | – | 20 | – | – |
| Melamin | 7 | 10 | 10 | 10 | 10 | 10 |
| Pentaerythrit | – | – | – | – | 5 | 5 |
| LOI I | 25,5 | 27,0 | 29,0 | 23,0 | 29,5 | 32,0 |
| LOI II | 25,5 | 26,5 | 23,5 | 19,0 | 28,5 | 30,5 |

Während die Mischungen Nr. 3 und 4 durch die Wasserbehandlung die flammhemmenden Eigenschaften weitgehend verlieren, zeigen Mischungen Nr. 1, 2, 5 und 6 (mit PAN-Polyphosphonsäure) nur geringe Abnahme der Flammschutzaktivität.

Mischungen Nr. 5 und 6 werden im UL 94-Test mit V 0 bewertet.

Beispiel 9

Zur Prüfung der Flammschutzwirkung und Wasserbeständigkeit der Polyacrylnitrilpolyphosphonsäure (Beispiel 2) in intumescierenden Anstrichen werden Mischungen aus 3 Teilen einer 50 %igen Lösung eines Alkydharzes (Alkydal F 41®) und ein Teil Flammschutzmittel (s. Tabelle) hergestellt und auf 1,5 mm dicke Holzplättchen in drei aufeinanderfolgenden Anstrichen aufgetragen und getrocknet. Als Blindproben werden Holzsplättchen nur mit drei Alkyldalanstrichen versehen. Ein Teil der beschichteten Plättchen wird 10 Tage in gerührtem, 50 °C warmen Wasser gelagert, anschließend getrocknet und im o. g. Durchbrenntest mit den Originalproben verglichen.

Die angegebenen Durchbrennzeiten sind aus drei Messungen gemittelt :

6

| Flammschutzmittel: | Mischungen: | | | |
| --- | --- | --- | --- | --- |
| | Blind-probe | Nr. 1 (Vgl.) | Nr. 2 (Vgl.) | Nr. 3 |
| Ammoniumpolyphosphat | – | 30 | – | – |
| Aminoethandiphosphonsäure | – | – | 30 | – |
| Polyacrylnitril-poly-phosphonsäure | – | – | – | 30 |
| Melaminformaldehydharz | – | 15 | 15 | 15 |
| Pentracrythrit | – | 7,5 | 7,5 | 7,5 |
| Durchbrennzeit in s: (ohne Wasserbehandlung) | 33 | >180 | >180 | >180 |
| Durchbrennzeit in s: (nach Wasserlagerung) | 39 | 96 | 121 | >180 |

Nur die erfindungsgemäße Mischung Nr. 3 weist nach der Wasserbehandlung keine Abnahme der Flammschutzwirkung auf.

**Patentansprüche** (für die Vertragsstaaten : AT, BE, CH, FR, GB, IT, LI, NL)

1. Verfahren zur Herstellung von Polyacrylnitrilpolyphosphonsäure mit Phosphorgehalten von 1 bis 17 Gewichts-Prozent, dadurch gekennzeichnet, daß man Homo- oder Copolymerisate des Acrylnitrils mit Molekulargewichten von 1 000 bis 200 000 bei Temperaturen von 120 bis 220 °C mit 0,2 bis 8 Mol phosphoriger Säure pro Mol Nitrilgruppe umsetzt und anschließend die nicht umgesetzte phosphorige Säure durch Lösen in Wasser aus dem Umsetzungsprodukt entfernt.

2. Verfahren nach Anspruch 1, dadurch gekennzeichnet, daß man pro Mol Nitrilgruppe mit 2 bis 4 Mol phosphoriger Säure umsetzt.

3. Verfahren nach Anspruch 1 und 2, dadurch gekennzeichnet, daß man die Umsetzung bei 160 bis 190 °C durchführt.

4. Verfahren nach Anspruch 1 bis 3, dadurch gekennzeichnet, daß man die phosphorige Säure bei 120 bis 220 °C, bevorzugt bei 160 bis 190 °C, vorlegt und das Acrylnitrilpolymere zudosiert.

5. Verfahren nach Anspruch 1 bis 4, dadurch gekennzeichnet, daß man zur Entfernung der nicht umgesetzten phosphorigen Säure des Reaktionsgemisch aus phosphoriger Säure und Acrylnitrilpolymerisat mit 10 bis 50 ml Wasser pro Mol phosphoriger Säure versetzt und anschließend die Polyacrylnitrilpolyphosphonsäure durch Eindosieren in einen Überschuß Wasser ausfällt.

6. Verwendung der nach Anspruch 1 bis 5 erhaltenen Polyacrylnitrilpolyphosphonsäure als Flammschutzmittel, gegebenenfalls mit anderen Zusätzen, in Kunststoffen, dadurch gekennzeichnet, daß man 3 bis 30 Gewichtsprozent, bezogen auf die Kunststoffabmischung, einsetzt.

7. Verwendung der Polyacrylnitrilpolyphosphonsäure gemäß Anspruch 6, dadurch gekennzeichnet, daß man Mischungen von Polyacrylnitrilpolyphosphonsäure mit Melamin, Melaminsalzen oder Melaminharzen im Gewichtsverhältnis 1 : 0,2 bis 1 : 5 einsetzt.

8. Verwendung der Polyacrylnitrilpolyphosphonsäure gemäß Anspruch 6 und 7, dadurch gekennzeichnet, daß man als Kunststoff Polypropylen einsetzt.

9. Verwendung der Polyacrylnitrilpolyphosphonsäure gemäß Anspruch 6 und 7, dadurch gekennzeichnet, daß man als Kunststoff Polybutylenterephthalat oder Polylaurinlactam (Polyamid 12) einsetzt.

10. Verwendung der nach Anspruch 1 bis 5 erhaltenen Polyacrylnitrilpolyphosphonsäure als Flammschutzmittel in intumescierenden Anstrichen.

**Patentansprüche** (für den Vertragsstaat DE)

1. Verfahren zur Herstellung von Polyacrylnitrilpolyphosphonsäure mit Phosphorgehalten von 1 bis 17 Gewichtsprozent, wobei man Homo- oder Copolymerisate des Acrylnitrils mit Molekulargewichten von 1 000 bis 200 000 mit 0,2 bis 8 Mol phosphoriger Säure pro Mol Nitrilgruppe umsetzt und anschließend die nicht umgesetzte phosphorige Säure durch Lösen in Wasser aus dem Umsetzungsprodukt entfernt, dadurch gekennzeichnet, daß man die Umsetzung bei 160 bis 190 °C durchführt.

**0 082 261**

2. Verfahren nach Anspruch 1, dadurch gekennzeichnet, daß man die phosphorige Säure bei 160 bis 190 °C vorlegt und das Acrylnitrilpolymere zudosiert.

3. Verfahren nach Anspruch 1 und 2, dadurch gekennzeichnet, daß man zur Entfernung der nicht umgesetzten phosphorigen Säure das Reaktionsgemisch aus phosphoriger Säure und Acrylnitrilpolymerisat mit 10 bis 50 ml Wasser pro Mol phosphoriger Säure versetzt und anschließend die Polyacrylnitrilpolyphosphonsäure durch Eindosieren in einen Überschuß Wasser ausfällt.

4. Verwendung der nach Anspruch 1 bis 3 erhaltenen Polyacrylnitrilpolyphosphonsäure als Flammschutzmittel, gegebenenfalls mit anderen Zusätzen, in Kunststoffen, dadurch gekennzeichnet, daß man 3 bis 30 Gewichtsprozent, bezogen auf die Kunststoffabmischung, einsetzt.

5. Verwendung der Polyacrylnitrilpolyphosphonsäure gemäß Anspruch 4, dadurch gekennzeichnet, daß man Mischungen von Polyacrylnitrilpolyphosphonsäure mit Melamin, Melaminsalzen oder Melaminharzen im Gewichtsverhältnis 1 : 0,2 bis 1 : 5 einsetzt.

6. Verwendung der Polyacrylnitrilpolyphosphonsäure gemäß Anspruch 4 und 5, dadurch gekennzeichnet, daß man als Kunststoff Polypropylen einsetzt.

7. Verwendung der Polyacrylnitrilpolyphosphonsäure gemäß Anspruch 4 und 5, dadurch gekennzeichnet, daß man als Kunststoff Polybutylenterephthalat oder Polylaurinlactam/Polyamid 12) einsetzt.

8. Verwendung der nach Anspruch 1 bis 3 erhaltenen Polyacrylnitrilpolyphosphonsäure als Flammschutzmittel in intumescierenden Anstrichen.

**Claims** (for the Contracting States : AT, BE, CH, FR, GB, IT, LI, NL)

1. A process for the production of a polyacrylonitrile-polyphosphonic acid having a phosphorus content of 1 to 17 wt%, characterised in that an acrylonitrile homopolymer or copolymer having a molecular weight of 1,000 to 200,000 is reacted with 0.2 to 8 mol of phosphorous acid per mol of nitrile groups at a temperature of 120 to 220 °C and then the unconverted phosphorous acid is removed from the reaction product by dissolution in water.

2. A process according to claim 1, characterised in that 2 to 4 mols of phosphorous acid are reacted per mol of nitrile groups.

3. A process according to claim 1 or 2, characterised in that the reaction is carried out at 160 to 190 °C.

4. A process according to any of claims 1 to 3, characterised in that the phosphorous acid is provided at 120 to 220 °C, preferably 160 to 190 C, and the acrylonitrile polymer is fed into it.

5. A process according to any of claims 1 to 4, characterised in that to remove the unconverted phosphorous acid the reaction mixture of phosphorous acid and acrylonitrile polymer is mixed with 10 to 50 ml of water per mol of phosphorous acid and then the polyacrylonitrile-polyphosphonic acid is precipitated by feeding into an excess of water.

6. The use of the polyacrylonitrile-polyphosphonic acid obtained according to the process of any of claims 1 to 5 as a flameproofing agent, optionally together with one or more other additives, in plastics materials, characterised in that 3 to 30 wt%, based on the plastics mixture, is used.

7. The use according to claim 6, characterised in that a mixture of polyacrylonitrile-polyphosphonic acid with melamine or a melamine salt or a melamine resin in a weight ratio of 1 : 0.2 to 1 : 5 is used.

8. The use according to claim 6 or 7, characterised in that polypropylene is used as plastics material.

9. The use according to claim 6 or 7, characterised in that polybutylene terephthalate or polylaurolactam (polyamide-12) is used as plastics material.

10. The use of the polyacrylonitrile-polyphosphonic acid obtained according to the process of any of claims 1 to 5 as a flameproofing agent in intumescent coatings.

**Claims** (for the Contracting State DE)

1. A process for the production of a polyacrylonitrile-polyphosphonic acid having a phosphorus content of 1 to 17 wt% by reacting an acrylonitrile homopolymer or copolymer having a molecular weight of 1 000 to 200 000 with 0.2 to 8 mol of phosphorous acid per mol of nitrile groups and then removing the unconverted phosphorous acid from the reaction product by dissolution in water, characterised in that the reaction is carried out at 160 to 190 °C.

2. A process according to claim 1, characterised in that the phosphorous acid is provided at 160 to 190 °C and the acrylonitrile polymer is fed into it.

3. A process according to claim 1 or 2, characterised in that in order to remove the unconverted phosphorous acid the reaction mixture of phosphorous acid and acrylonitrile polymer is mixed with 10 to 50 ml of water per mol of phosphorous acid and then the polyacrylonitrile-polyphosphonic acid is precipitated by feeding into an excess of water.

4. The use of the polyacrylonitrile-polyphosphonic acid obtained according to the process of any of claims 1 to 3 as a flameproofing agent, optionally together with one or more other additives, in plastics materials, characterised in that 3 to 30 wt%, based on the plastics mixture, is used.

8

5. The use according to claim 4, characterised in that a mixture of polyacrylonitrile-polyphosphonic acid with melamine or a melamine salt or a melamine resin in a weight ratio of 1 : 0.2 to 1 : 5 is used.

6. The use according to claim 4 or 5, characterised in that polypropylene is used as plastics material.

7. The use according to claim 4 or 5, characterised in that polybutylene terephthalate or polyaurolactam (polyamide-12) is used as plastics material.

8. The use of the polyacrylonitrile-polyphosphoric acid obtained according to the process of any of claims 1 to 3 as a flameproofing agent in intumescent coatings.

**Revendications** (pour les Etats contractants : AT, BE, CH, FR, GB, IT, LI, NL)

1. Procédé de préparation d'acide poly-acrylonitrile-polyphosphonique ayant des teneurs en phosphore de 1 à 17 % en poids, caractérisé par le fait que l'on fait réagir des produits d'homopolymérisation ou de copolymérisation de l'acrylonitrile, ayant des poids moléculaires de 1 000 à 200 000, à des températures de 120 à 220 °C, sur 0,2 à 8 moles d'acide phosphoreux par mole de groupe nitrile et qu'ensuite on élimine du produit de réaction l'acide phosphoreux non converti, par dissolution dans l'eau.

2. Procédé selon la revendication 1, caractérisé par le fait que, par mole de groupe nitrile, on fait réagir sur 2 à 4 moles d'acide phosphoreux.

3. Procédé selon les revendications 1 et 2, caractérisé par le fait que l'on conduit la réaction à une température de 160 à 190 °C.

4. Procédé selon les revendications 1 à 3, caractérisé par le fait que l'on place initialement l'acide phosphoreux à une température de 120 à 220 °C, de préférence à une température de 160 à 190 °C, et que l'on ajoute de façon dosée le polymère d'acrylonitrile.

5. Procédé selon les revendications 1 à 4, caractérisé par le fait que, pour éliminer l'acide phosphoreux non converti, on ajoute au mélange réactionnel, formé d'acide phosphoreux et de produit de polymérisation d'acrylonitrile, de 10 à 15 ml d'eau par mole d'acide phosphoreux et qu'on précipite ensuite l'acide poly-acrylonitrile-polyphosphonique en l'introduisant de façon dosée dans un excès d'eau.

6. Utilisation de l'acide poly-acrylonitrile-polyphosphonique obtenu selon les revendications 1 à 5 en tant que retardateur de combustion, éventuellement avec d'autres additifs, dans des matières synthétiques, caractérisée par le fait que l'on utilise de 3 à 30 % en poids, relativement au mélange de matière synthétique.

7. Utilisation de l'acide poly-acrylo-nitrile-polyphosphonique selon la revendication 6, caractérisée par le fait que l'on utilise des mélanges d'acide poly-acrylonitrile-polyphosphonique et de mélamine, de sels de mélamine ou de résines de mélamine, dans un rapport pondéral de 1 : 0,2 à 1 : 5.

8. Utilisation de l'acide poly-acrylonitrile-polyphosphonique selon les revendications 6 et 7, caractérisée par le fait que l'on utilise le polypropylène comme matière synthétique.

9. Utilisation de l'acide poly-acrylonitrile-polyphosphonique selon les revendications 6 et 7, caractérisée par le fait que l'on utilise, comme matière synthétique, le polytéréphtalate de butylène ou le polylaurolactame (polyamide « 12 »).

10. Utilisation de l'acide poly-acrylonitrile-polyphosphonique comme retardateur de combustion dans des peintures intumescentes.

**Revendications** (pour l'Etat contractant DE)

1. Procédé de préparation d'acide poly-acrylonitrile-polyphosphonique ayant des teneurs en phosphore de 1 à 17 % en poids, dans lequel on fait réagir des produits d'homopolymérisation ou de copolymérisation de l'acrylonitrile, ayant des poids moléculaires de 1 000 à 200 000 sur 0,2 à 8 moles d'acide phosphoreux par mole de groupe nitrile et qu'ensuite on élimine du produit de réaction l'acide phosphoreux non converti, par dissolution dans l'eau, caractérisé par le fait que l'on conduit la réaction à une température de 160 à 190 °C.

2. Procédé selon la revendication 1, caractérisé par le fait que l'on place initialement l'acide phosphoreux à une température de 160 à 190 °C et que l'on ajoute le polymère d'acrylonitrile de façon dosée.

3. Procédé selon les revendications 1 et 2, caractérisé par le fait que pour éliminer l'acide phosphoreux non converti, on ajoute, au mélange réactionnel formé d'acide phosphoreux et de produit de polymérisation d'acrylonitrile, de 10 à 50 ml d'eau par mole d'acide phosphoreux et qu'ensuite on précipite l'acide poly-acrylonitrile-polyphosphonique en l'introduisant de façon dosée dans un excès d'eau.

4. Utilisation de l'acide poly-acrylonitrile-polyphosphonique obtenu selon les revendications 1 à 3 comme retardateur de combustion, éventuellement avec d'autres additifs, dans des matières synthétiques, caractérisée par le fait que l'on en utilise de 3 à 30 % en poids, relativement au mélange de matière synthétique.

5. Utilisation de l'acide poly-acrylonitrile-polyphosphonique selon la revendication 4, caractérisée par le fait que l'on utilise des mélanges d'acide poly-acrylonitrile-polyphosphonique et de mélamine, de sels de mélamine ou de résines de mélamine, dans un rapport pondéral de 1 : 0,2 à 1 : 5.

6. Utilisation de l'acide poly-acrylonitrile-polyphosphonique selon les revendications 4 et 5, caractérisée par le fait que l'on utilise le polypropylène comme matière synthétique.

7. Utilisation de l'acide poly-acrylonitrile-polyphosphonique selon les revendications 4 et 5, caractérisée par le fait que l'on utilise, comme matière synthétique, le polytéréphtalate de butylène ou le polylaurolactame (polyamide « 12 »).

8. Utilisation de l'acide poly-acrylonitrile-polyphosphonique comme retardateur de combustion dans des peintures intumescentes.